# EUROPEAN PATENT APPLICATION

(11) **EP 1 653 143 A1**
(43) Date of publication of application: **03.05.2006**
(21) Application number: 05109863.0
(22) Date of filing: 21.10.2005
(51) Int. Cl.: F16L 37/098

(54) **Fluid quick connector with adapter**

(30) Priority: 26.10.2004 US 973362
(71) Applicant: ITT MANUFACTURING ENTERPRISES, INC., Wilmington, Delaware 19801 (US)
(72) Inventor: Andre, Michael J., Waterford MI 48327 (US); Valdez, Frank A., Clinton Township MI 48036 (US); Pierson, Erik E., Ortonville MI 48462 (US)
(74) Representative: Dreiss, Fuhlendorf, Steimle & Becker

(57) **Abstract**

A fluid quick connector (20) includes concentrically joinable first and second endforms (22, 50). A housing (42) having an open end is carried on one endform (22) and latchingly receives an adapter (60) fixed on the other endform (50). An end of the adapter is biased into clamping engagement with one endform when the adapter engages the housing. In another aspect, the adapter includes two joinable sections which are fixedly mountable about one end of the first endform. A hollow insert is fixed within the end of the first endform and engages the end of the second endform in the adapter to seal the second endform to the adapter.

## Description

### BACKGROUND

The present invention relates, in general, to fluid quick connectors which couple fluid carrying components.

Snap-fit or quick connectors are employed in a wide range of applications, particularly, for joining fluid carrying conduits in automotive and i n-dustrial application. Such quick connectors utilize retainers or locking elements for securing one connector component, such as a tubular conduit, within a complimentary bore of another connector component or housing. Such retainers are typically of either the axially-displaceable or radially-displaceable type. The terms "axially-displaceable" or "radially-displaceable" are taken relative to the axial bore through another component.

In a typical quick connector with an axially displaceable, retainer, the retainer is mounted within a bore in a housing of one connector component of housing. The retainer has a plurality of radially and angularly extending legs which extend inwardly toward the axial center line of the bore in the housing. A tube or conduit to be sealingly mounted in the bore in the housing includes a radially upset portion or flange which abuts an inner peripheral surface of the retainer legs. Seal and spacer members as well as a bearing or top hat are typically mounted in the bore ahead of the retainer to form a seal between the housing and the tube when the tube is lockingly engaged with the retainer legs in the housing.

Radially displaceable retainers are also known in which the retainer is radially displaceable through aligned bores or apertures formed transversely to the main throughbore in the housing. The radially displaceable retainer is typically provided with a pair of depending legs which are sized and positioned to slip behind the radially upset portion or flange on the tube only when the tube or conduit is fully seated in the bore in the housing. This ensures a positive locking engagement of the tube with the housing as well as providing an indication that the tube is fully seated since the radially displaceable retainer can be fully inserted into the housing only when the tube has been fully inserted into the bore in the housing.

Regardless of the type of retainer, the housing portion of a fluid connector typically includes an elongated stem having one or more annular barbs spaced from a first end. The barbs provide secure engagement with a tube or conduit which is forced over the barbs to connect the housing with one end of the conduit.

It is desirable in fluid handling conduits and fluid quick connectors to ensure that the connectors have their mating portions properly coupled together. A faulty connector enables an associated host system to leak fluid. This can be particularly disadvantageous when the system is under pressure.

In most fluid quick connectors used in automotive and other applications, one or more seal members, such as O-rings, are inserted into the connector body to seal the connection between one component or endform and another component or the connector housing itself. These seal members, while providing an effective seal, increase component costs of the quick connector and its assembly time.

Such fluid quick connectors have found wide spread use in vehicle applications on fuel and brake lines. However, in other applications space is at a premium and adding a quick connection between two fluid devices or two fluid carrying conduits, for example, is difficult. These added application demands may require a different approach to quick connector design.

Thus, it would be desirable to provide an approved quick connector which has a reduced number of components for easy installation and a minimal overall length for ease of application in confined spaces.

### SUMMARY

The present invention is a fluid coupling between joining two fluid carrying members, or endforms as described in claim 1 .

Generally, the fluid coupling includes first and second endforms, each having an end. A tip having a surface geometry extends from the first endform. One end of the second endform and the tip are concentrically disposed with the first and second endforms are brought together. An adapter means is mounted about the concentrically disposed ends of the second endform in the tip for holding the first and second endforms together.

In one aspect, the fluid coupling includes a first endform having a tip and a shoulder, a housing having a connecting end, an adapter fixedly latched to the housing, and having a flexible end portion. The adapter is mounted about the second endform. The housing and the tip of the adapter have a geometry creating an interference between mating portions of the housing and the tip of the adapter when the tip is inserted into the second endform to bias the tip of the adapter into sealing engagement with the ends of the first and second endforms.

In another aspect, the fluid quick connector includes a body having two joinable portions mountable about the tubular member in a coupled position.

In another aspect, the adapter includes engagable hooks and apertures on the joinable portions of the body for fixing the joinable sections together about the tubular member.

In another aspect, the tubular member has at least one radial projection with at least one radially displaced portion spaced from an end engagable with the endform. The adapter has a complementary radially displaced portion engagable with at least one radially displaced portion on the tubular member to axially fix the adapter to the tubular member.

In another aspect, the adapter has a bore extending from a first end which non-axially movably receives a first tubular member. A recess extending from a second end of the adapter non-axially movably receives an endform. The tip is an insert extending from the first endform to form a seal between the second endform and the adapter.

The fluid quick connector of the present invention provides a fluid connection between two fluidly coupleable members with a small overall length. The fluid quick connector provides substantially all of the sealing capability between members without the use of added cost O-rings. Substantially all of the clamping force holding the two members together is provided by interference between the adapter and a housing which forcibly biases a tip end of the adapter into sealing engagement with the tubular member.

### BRIEF DESCRIPTION OF THE DRAWING

The various features, advantages and other uses of the present invention will become more apparent by referring to the following detailed description and drawing in which:
Fig. 1 is perspective view of one aspect of a fluid quick connector depicted in a fully assembled state;
Fig. 2 is an exploded, longitudinal, cross sectional view of the quick connector of Fig. 1, prior to assembly;
Fig. 3 is a longitudinal cross-sectional view of the quick connector shown in Figs. 1 and 2, depicted in a partially assembled position;
Fig. 4 is a longitudinal cross- sectional view of the quick connector of Figs. 1 and 2 shown in a fully assembled position;
Fig. 5 is an exploded, side-by-side, perspective view of the adapter depicted in an open position;
Fig. 6 is a perspective view of another aspect of a fluid quick connector;
Fig. 7 is an exploded, longitudinal, cross-sectional view of the quick connector shown in Fig. 6; and
Fig. 8 is longitudinal, cross-sectional view of the quick connector shown in Figs. 6 and 7, but depicted in a fully assembled state.

### DETAILED DESCRIPTION

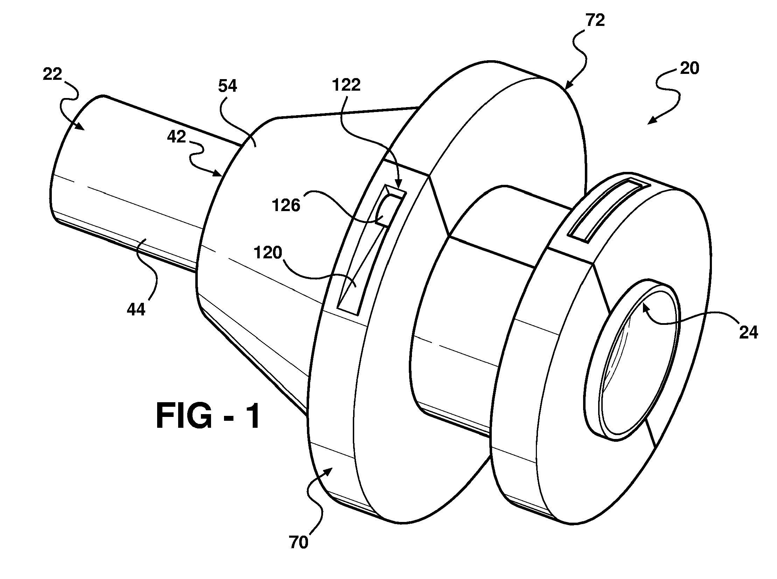

Referring now to the drawing, and to Figs. 1-5 in particular, there is depicted a fluid quick connector 20 adapted for fluidically coupling a first fluid carrying or operative component 22 and a second fluid operative or fluid carrying component 24.

The first fluid component 22 will be hereafter described as an endform. The endform 22 can be a separate member which receives a separate hose or conduit at one end or the tip end of a shape integrally formed on or sealingly joined to one end of an elongated metal or plastic tube. Further, the endform 22 can be integrally formed on or mounted as a separate element on a fluid use device, such as a pump, filter, radiator, heat exchanger, etc. The endform 22 has a bore 26 extending therethrough from a first end 28. The endform 22 includes a tip end denoted generally by reference number 30 which extends from the first end 28. The tip end portion 30 is formed with any suitable geometry, including the contoured geometry, shown by example only, in Fig. 1 wherein the tip end portion 30 tapers outwardly from the first end 28 to a first enlarged portion 32 and then transitions through a slightly concave portion 34 to a second enlarged or raised portion 36. Other contours or geometries may be employed for effective sealing with the second fluid carrying member 24 as described hereafter.

Mounting means 40 are formed on the endform 22 spaced from the first end 28 for mounting a first coupler member or bell housing 42 which is described in greater detail hereafter, on the endform 22. In one aspect, described by way of example only, the mounting means 40 includes the first raised projection 36 in the form of a enlarged diameter bead or flange integrally with the endform 22 and a second axially spaced projection or enlargement 44. The second enlargement 44 can be of smaller outer diameter than the first enlargement or bead 36, again by way of example only. The projections 36 and 42 form a smaller diameter recess or annular groove 46 therebetween as shown in Figs. 1-4. The purpose of the recess or groove 46 will become more apparent hereafter.

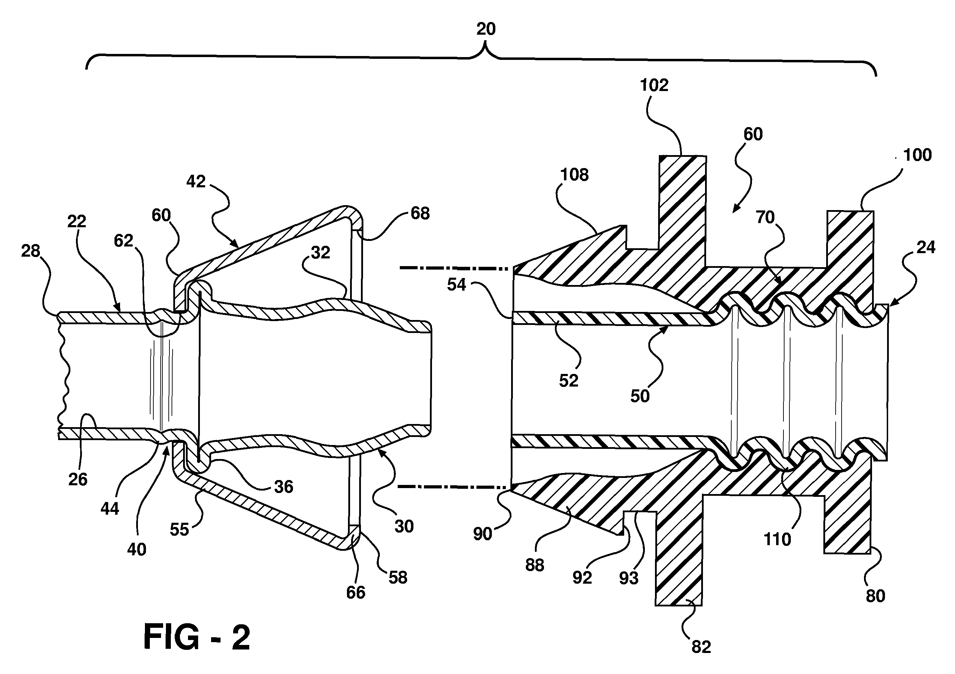

The second fluid operative component 24 is depicted as being in the form of a tubular member, or at least a tubular end portion of a fluid operative component. The second fluid operative component 24 will be referred to hereafter as having a second endform portion 50. The endform 50 has a tip end 52 extending from a first end 54 axially along the longitudinal extent of the endform 50. lnitially, the tip end portion 52 of the second endform 50 has a constant diameter shape as shown in Fig. 2. Only after engagement with the tip portion 30 of the first endform 22, does the tip portion 52 of the second endform 50 expand radially outward to conform to the geometry of the tip portion 30 of the first end flange 22 as shown in Figs. 1-4.

In this manner, the tip portion 52 of the second endform 50 forms a seal with the tip portion 30 of the first endform 22 thereby obviating the need for the introduction of separate seal elements, such as O-rings, spacers, etc., in the fluid quick connector 20. This reduces the number of separate components required to construct the fluid quick connector 20 and reduces its manufacturing costs and assembly time.

The fluid quick connector 20 includes a first connector component, hereafter referred to as the housing 42, and a second connector component hereafter referred to as an adapter 60.

The first connector component or housing 42 is formed of a high strength material, such as high strength plastic or metal. The housing 42 is in the form of frusto-conical member having a tapered sidewall 55 which extends angularly outward from a first smaller diameter end 56 to an opposed larger diameter second end 58.

A radially inward extending flange or lip 60 is formed at the first end 52 of the wall 55 and forms an aperture 62 opening to the hollow interior of the housing 42. Similarly, a radially inturned lip 66 is formed at the second end 58 of the sidewall 55 of the housing 42 and defines a second aperture 68, also opening to the hollow interior of the housing 42.

The first radially inturned lip 62 is mounted in the groove 46 on the first endform 22 as shown in Fig. 1. The connection can be a fixed connection or the housing 42 can be rotatably mounted on the first endform 22 with little if any axial movement or play.

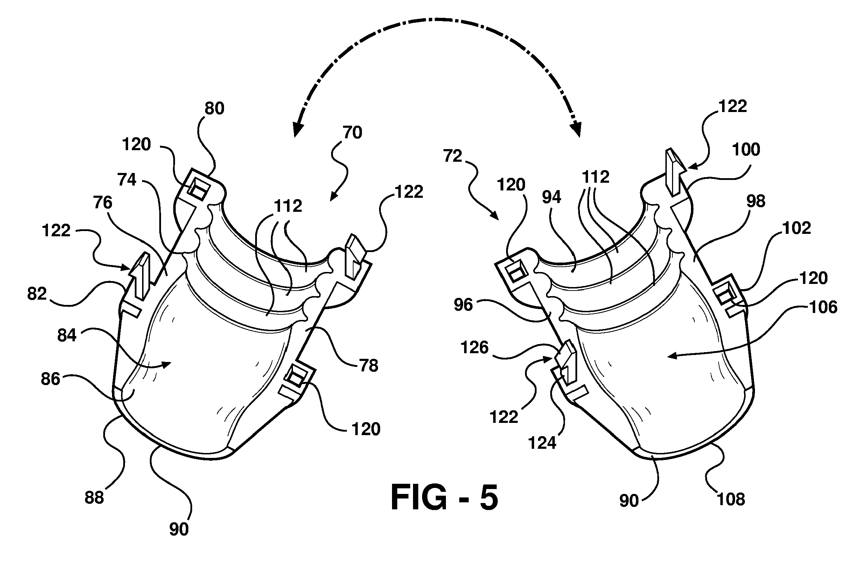

As shown in Fig. 5, the adapter 60 is formed of two complementary shaped sections 70 and 72. The first and second sections 70 and 72 may be separate members which are joined together or members interconnected by a hinge wherein a joinable connection is provided to hold the two sections 70 and 72 in a closed configuration surrounding the second endform 24 as shown in Fig. 1.

In the separate section aspect shown in Fig. 5, the first section 70 is formed with a hemispherical shaped portion 74 having opposed side edges 76 and 78. Spaced arcuate enlargements or flanges 80 and 82 are formed on the outer surface of the portion 74 between the side edges 76 and 78.

A tip end portion 84 projects from the flange 82 and one end of the hemispherical shaped portion 74 and has an inner surface 86 and a wedge shaped outer surface 88 shown more clearly in Figs. 1-4. The wedge shaped surface 88 extends from a first end 90 to an opposed second end 92. A recess 93 is formed in the outer surface of the adapter between the second end 92 of the wedge shaped surface 88 and the flange 82, the purpose of which will be described in greater detail hereafter.

The first section 70 and the second section 72 are formed of a suitable material which allows flexible bending movement of the tip portions 86 of both sections 70 and 72. For example, a polyamide, such as one sold under the trademark NYLON, may be employed for both sections 70 and 72.

The second section 72 likewise includes a hemispherical shaped portion 94, which extends between opposed side edges 96 and 98. Enlarged ribs or flanges 100 and 102 are formed exteriorly over the portion 94. A tip end portion 106 projects from the flange 102. The tip end portion 106 likewise has a wedge shaped outer surface 108 and an inner surface 104.

As shown in Figs. 1-4, the first and second sections 70 and 72 of the adapter 60 are joined together about the second endform 24. To assist in fixedly mounting each section 70 and 72 of the adapter 80 on the second endform 24, a plurality of corrugations formed of alternating ribs and grooves 110 are provided in the second endform 24 axially adjacent the tip end 52. Mating alternating recessing and projections 112 are formed in the interior of the hemispherical portions 74 and 94 of the sections 70 and 72 to mechanically interlock the two sections 70 and 72 about the second endform 24 to prevent axial movement of the adapter 60 relative to the second endform 24 and to prevent separation between the adapter 60 and the second endform 24.

To facilitate joinder of the first and second sections 70 and 72 together, mating projections 122 and slots or apertures 120 are formed in the side edges 70 and 78 or on the ends of the flanges 80 and 82 of the first section 70 and the mating side edges 96 and 98 or flanges 100 and 102 of the second section 94. Although a single projection or aperture may be formed in each side edge 76, 78, 96 and 98, for a more secure joinder, a plurality, such as two apertures or projections are formed in each side edge 76, 78, 96, and 98. The projections and apertures or slots alternate from side edge to side edge as shown in Fig. 5. As shown in Fig. 1, the slots 120 are formed in the flanges 80 and 82 and 100 and 102. The projections or hooks 122 as shown in Fig. 5 may, by example, be provided in the form of a hook wherein a stem 124 projects from the sections 70 or 72 and terminates in an angled tip 126. The tip 126 is adapted to slide through one aligned aperture or slot 120 in the opposed section 70 or 72 and snap over and lockingly engage an inner edge of the flanges 80, 82, 100 or 102 at one end of the associated slot 120 as shown in Fig. 1.

As described above, the tip ends 84 and 106 of the adapter 60 are molded or formed to the shape or geometry of the tip end 30 of the first endform 22.

As shown in Fig. 2, prior to joinder, the tip end 52 of the second endform 50 has a generally constant diameter, annular shape. As the tip end 52 is mated with the tip end 30 of the first endform 22, the tip end 52 expands and sealingly conforms to the geometry of the tip end 30 of the first endform 22 to form a seal therebewteen. According to this aspect of the invention, substantially all of the sealing capability provided in the quick connector 20 is formed between the tip end 52 of the second endform 50 and the tip end 30 of the first endform 22.

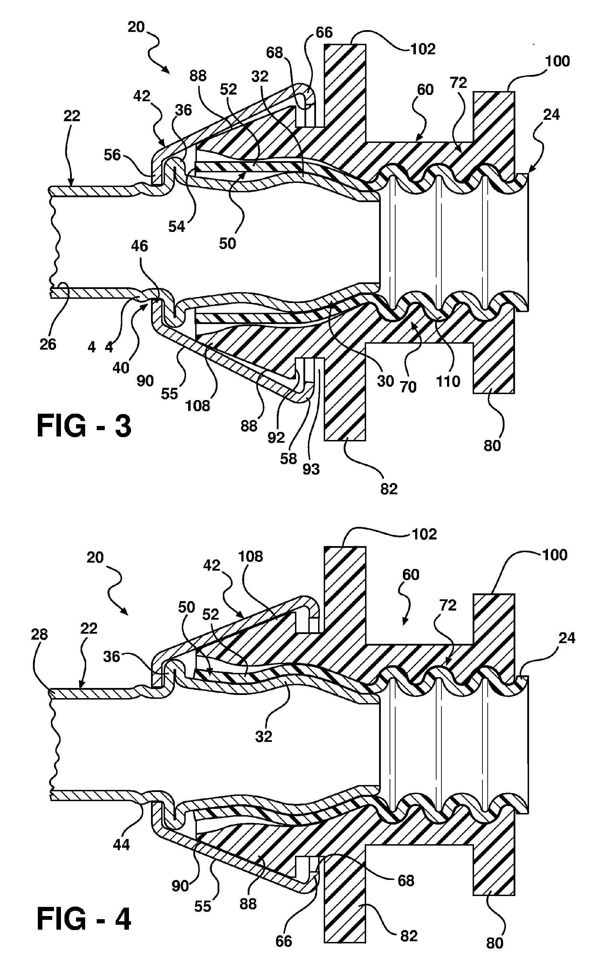

When the tip 52 of the adapter 60 is inserted through the aperture 68 in one end of the housing 42, the outer diameter of the wedge shaped surfaces 88 and 108 will initially flex radially inward to allow insertion of the complete wedge shaped surfaces 88 and 108 through the aperture 68 and into the interior of the housing 42 as shown in Fig. 3.

During continued insertion, the forward most end of the tip ends 84 and 106 will engage the inner surface of the sidewall 55 of the housing 42 as shown in Fig. 3. Further insertion of the adapter 60 into the housing 42 will cause the tip ends 84, 106 to bend radially inward as shown by the arrow in Fig. 3 to a position shown in Fig. 4 in which substantially all of the radially inner surface of the tip ends 84, 106 of the adapter 60 bends the end of the second endform 50 into conformity with the geometry or outer shape of the tip end of the first endform 22 to tightly retain the first endform 22 in the second endform 50 in secure engagement. Substantially all of the clamping force holding the first and second endforms 22 and 50 together, is provided by the adapter 60.

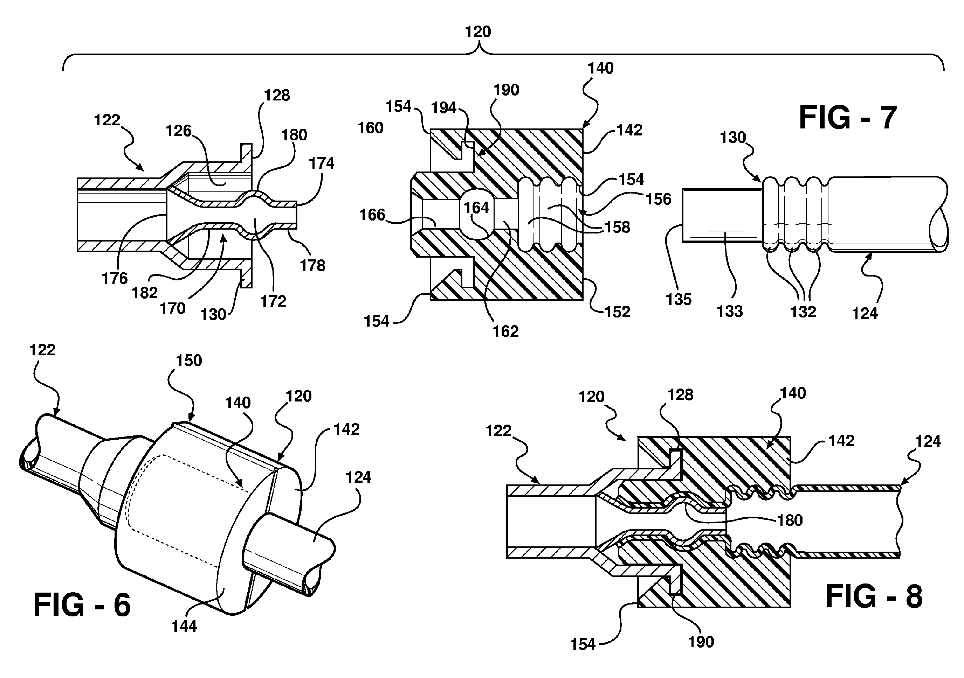

Another aspect of a fluid quick connector 120 according to the present invention is shown in Figs. 6-8. The quick connector 120, like the quick connector 20 described above, fluidically couples a first fluid carrying or operative component, such as an endform 122 to a second fluid operative or fluid carrying component 124.

The first fluid component 122 will be hereafter described as an endform. The endform 122 can be a separate member which receives a separate hose or conduit at one end or the tip end of a shape integrally formed on or sealingly joined to one end of an elongated metal or plastic tube. Further, the endform 122 can be integrally formed on or mounted as a separate element to a fluid use device, such as a pump, filter, radiator, heat exchanger, etc. The endform 122 has a bore 126 extending therethrough from a first end 128.

The endform 122 has a radially enlarged, outward extending flange 130 at the first end 128. The diameter of the first endform 120 may be constant from the first end 128 or may have other geometries, such as a step down geometry shown in Figs. 7 and 8, which is depicted by way of example only.

The second fluid operative element or component 124 is depicted as being in the form of a tubular member, made of any suitable material, such as plastic. The tubular member 124 can be a separate member or a tubular end portion or endform of a fluid operative component, such as the pump, tank, etc. The end portion, hereafter referred to as a the second endform 130, is formed with at least one and, preferably, a plurality of axially contiguous ribs or corrugations 132.

A flexible cuff or sleeve portion 133 extends from the axially endmost rib 132 to an end 135. The sleeve 133 is designed with flexibility to enable it to be conformable as described hereafter.

The fluid quick connector 120 includes an adapter 140 formed of a suitable high strength plastic or metal. The adapter 140 includes a housing formed of first and second housing portions 142 and 144. Although the housing portions 142 and 144 may have any exterior shape, such as polygonal, cubical, etc., by example only, the housing portions 142 and 144 have generally hemispherical shape so as to form a right circular cylinder about the first and second endforms 122 and 124.

By way of example only, the housing portions 142 and 144 are substantially identical and may be joined together by interlocking projections or recesses or by means of hinge 150 shown by way of example only in Fig. 6. The hinge 150 may be a living hinge integrally molded between the two having housing portions 142 and 144 when the housing portions 142 and 144 are formed of a moldable plastic, or as a separate element fixed to the housing portions 142 and 144 by fastening means.

The hinged construction formed by the hinge 150 or by the separate housing portions interlockable by meeting projections or hooks and apertures enables the housing portions 142 and 144 to be lockingly joined together about end portions of the first and second endforms 122 and 124 as shown in Fig. 8. Interlocking hooks 122 and apertures 120, not shown, may be used to fix the housing portions 142 and 144 together.

Each housing portion 142 and 144, with only housing portion 142 being shown in detail in Figs. 7 and 8, is in the form of a solid body having a first end 152 and then opposed second end 154. A bore 156 extends axially from the first end 152 from an aperture 157 at the first end 152. The bore 156 has a first portion extending from the first end 152 of the housing portion 142 which is formed with a plurality of hemispherical recesses 158 which are complementary in shape to the ribs or corrugations 132 on the second endform 130. This arrangement enables the corrugations 132 on the second endform to fit snugly within the recesses 158 in the housing portion 142 to fix the second component 124 to the housing portions 142 and 144 when the first and second housing portions 142 and 144 are joined together. This arrangement also minimizes axial movement and separation of the housing 140 and the second endform 124.

The bore 156 continues from the recesses 158 through an irregularly shaped bore portion 160 which has a first tapered bore portion 162, an enlarged, intermediate bore portion 164, and an outwardly tapered end bore portion 166. The intermediate bore portion 164 defines an interior cavity within the housing 140 which is complementary to the shape of an upset on an insert 170.

The insert 170 is in the form of a unitary body having a throughbore 172 extending from a first end 174 to an opposed second end 176. The body of the insert 160 has an outwardly tapered end portion 178 extending from the first end 174 which transitions into a generally spherical shaped upset 180. An outwardly tapered, generally frustoconical end portion 182 extends from the upset 180. The exterior shape of the insert 170 is complementary to the shape of the bore portion 160 in the joined housing portions 142 and 144 to snugly mount the insert 170 in the housing 140.

When the insert 170 and the endform 122 are formed of metal, the end 176 of the insert 170 may be fixed to an inner surface of the endform 122, as shown in Figs. 7 and 8, by welding, brazing, etc. Similarly, when the endform 122 and the insert 170 are formed of plastic, the insert 170 may be fixed to an interior portion of the endform 122 by welding, such as spin welding, heat welding, etc.

In this manner, the end portion 174 of the insert 170 projects axially outward from the end 128 of the endform 122 so that the upset 180 slides into the enlarged intermediate bore portion 164 of the bore 160 in the adapter 140 at the same time the flange 130 engages a recess in the adapter 140 upon engagement of the endform 122 with the adapter 140.

The housing portions 142 and 144 each include an arcuate recess 190 which forms a generally annular recess extending from the second end 154 of the housing portions 142 and 144. The recess 190 has an inner end portion 194 complementary to the shape of the flange 130 on the first endform 122 to snugly receive and fix the first endform 122 in the housing 20 when the first and second housing portion 142 and 144 are joined together.

The second end portions 154 of the housing portions 142 and 144 have a wedge shape and are bendable outward to allow insertion of the first endform 122 into the recess 190. Alternately, the flange 130 may be inserted into the recess 190 in one housing portion 142 or 144 prior to joinder of the second housing portion 144 to the first housing portion 142.

In assembling this aspect of the connector 120, the endform 124 is inserted into one of the housing portions 142 or 144 of the adapter 140 and the housing portions 142 and 144 are locked together. The first endform 122 carrying the insert 170 is then inserted through the open end of the bore 160 in the adapter 140 until the flange 130 on the endform 122 engages the recess 190 in the adapter 140 to lock the first endform 122 in the adapter 140. At the same time, the insert 170 is forced through the interior of the sleeve 133 of the second endform 124 conforming the generally tubular sleeve 133 to the shape of the bore 160 in the adapter 140. The upset 180 in the insert 170 forces a portion of the sleeve 133 of the second endform 124 radially outward into the enlarged intermediate portion 164 of the bore 160 in the adapter 140 to seal the second endform 124 to the adapter 140. Since the insert 170 is sealingly and fixedly joined to the second endform 122, a complete sealed fluidic path is formed between the first and second endforms 122 and 124.

The housing 140, in the assembled state shown in Fig. 8, provides the necessary pull out resistance to prevent separation of the first and second endforms 122 and 124 from the housing 140. The insert 170 seals between the second endform 124 to the adapter 140 through the upset 180 thereby eliminating the need for separately inserted O-rings and spacers as in prior fluid quick connectors.

## Claims

1. A fluid coupling (20) comprising:
first and second endforms (22, 50), each having an end;
a tip (30,32) having a surface geometry extending from the first endform (22);
one end (54( of the second endform (50) and the tip disposed concentrically when the first and second endforms are joined together; and
adapter means (60), mounted about the concentrically disposed end of the second endform (50) and the tip, for holding the first and second endforms together.

2. The fluid coupling (20) of claim 1 wherein:
the adapter means (60) is fixedly mounted on the second endform (50), the adapter means having a flexible end portion;
a housing (42) adapted to be carried on the first endform and extending to an open end, the housing latchable to the adapter means (60); and
the housing and the end portion of the adapter means defining an interference between mating portions of the housing and the end portion of the adapter means when the first endform is inserted into the second endform to bias the end portion of the adapter means into sealing engagement with the second endform.

3. The fluid coupling of claim 2 wherein the adapter means (60) comprises:
a body having two joinable portions (70, 72), the joinable portions mountable about the second endform in a joined position.

4. The fluid coupling of claim 3 wherein the adapter means (60) further comprises:
engagable hooks (122) and apertures (120) formed in the joinable portions of the body for fixing the joinable portions together about the second endform.

5. The fluid coupling of claim 1 wherein the first endform (22) comprises:
at least one radial projection (32) having at least one radially displaced portion spaced from an end engagable with the second endform;
the housing (42) having a complementary radially displaced portion engagable with at least one radially displaced portion (40) on the first endform to axially fix the housing to the first endform.

6. The fluid coupling of claim 1 wherein the tip comprises:
an axial extension of the first endform, the end of the second endform having a complementary shape to the tip of the first endform.

7. The fluid coupling of claim 6 wherein:
the tip is concentrically disposed within the end of the second endform.

8. The fluid coupling of claim 1 wherein the tip comprises:
an insert sealingly fixed in and extending from the first endform, the insert concentrically engagable interiorly of the end of the second endform.

9. The fluid coupling of claim 8 further comprising:
an enlargement formed in a bore extending through the adapter means; and
an upset formed in the insert, the enlargement and the upset cooperating to sealingly join the end of the second endform to the adapter.

10. The fluid coupling of claim 1 wherein the adapter means comprises:
first and second connectable portions.

11. The fluid coupling of claim 10 wherein the adapter means further comprises:
a hinge connection between the first and second connectable portions.

12. The fluid coupling of claim 1 further comprising:
means, formed on the end of the second endform and the adapter means for non-axially movably fixing the second endform in the adapter means.

13. The fluid coupling of claim 12 wherein the mounting means comprises:
a plurality of complementarily engagable surfaces formed on the end of the second endform and the adapter means.

14. The fluid coupling of claim 8 wherein the adapter means further comprises:
a recess receiving a shoulder on the end of the first endform

15. A fluid quick connector comprising:
a first tubular member having a bore extending from one end;
an endform having a bore extending from one end, the endform having a tip end and an enlarged flange positioned relative to the tip end;
an adapter mounted about the first tubular member and the endform, the adapter including means for sealingly securing the first tubular member and the endform to the adapter.

16. The fluid quick connector of claim 15 further comprising:
means for fluidically sealing the first tubular member and the endform to the adapter.

17. The fluid quick connector of claim 15 wherein the adapter further comprises:
first and second joinable housing portions;
means for fixedly joining the first and second housing portions together about the first tubular member and the endform.

18. The fluid quick connector of claim 17 wherein the first and second housing portions comprise:
a bore extending from a first end adapted for non-axially movably receiving the first tubular member therein;
a recess formed in an opposed second end of the first and second housing portions, the recess adapted to non-axially movably receive the endform therein.
